# EUROPÄISCHE PATENTSCHRIFT

(11) **EP 2 741 943 B1**
(45) Veröffentlichungstag und Bekanntmachung des Hinweises auf die Patenterteilung: **15.06.2016**
(21) Anmeldenummer: 12734801.9
(22) Anmeldetag: 23.06.2012
(51) Int. Cl.: B60R 16/037, G10L 15/22

(54) **VERFAHREN ZUM ANSTEUERN FUNKTIONELLER EINRICHTUNGEN IN EINEM FAHRZEUG BEI SPRACHBEFEHL-BEDIENUNG**
METHOD FOR CONTROLLING FUNCTIONAL DEVICES IN A VEHICLE DURING VOICE COMMAND OPERATION
PROCÉDÉ PERMETTANT DE CONTRÔLER DES DISPOSITIFS FONCTIONNELS D'UN VÉHICULE PAR COMMANDE VOCALE

(30) Priorität: 10.08.2011 DE 102011109932
(43) Veröffentlichungstag der Anmeldung: 18.06.2014
(73) Patentinhaber: Audi AG, 85045 Ingolstadt (DE)
(72) Erfinder: WISCHHOF, Lars, 85051 Ingolstadt (DE); BEZOLD, Matthias, 91080 Spardorf (DE)
(74) Vertreter: Brandt, Kai
(86) Internationale Anmeldenummer: PCT/EP2012/002659
(87) Internationale Veröffentlichungsnummer: WO 2013/020615

(56) Entgegenhaltungen:
- EP-A2- 0 952 040
- DE-A1- 19 942 869
- US-A1- 2002 069 063
- US-A1- 2004 193 420
- US-A1- 2007 288 242
- US-A1- 2008 103 779
- US-A1- 2009 055 178
- US-B1- 6 654 720

## Beschreibung

Die Erfindung betrifft ein Verfahren zum Ansteuern funktioneller Einrichtungen in einem Fahrzeug vermittels einer Vorrichtung, die über Sprachbefehle bedienbar ist.

Die Erfindung betrifft insbesondere das Bedienen eines sog. Infotainmentsystems in einem Kraftfahrzeug, bei dem je nach Funktionalität unterschiedliche Arten von Daten verarbeitet werden. Beispielsweise umfasst das Infotainmentsystem eine Audio-Einrichtung zur akustischen Wiedergabe von Audio-Daten, seien dies Daten von einem Datenträger oder solche eines Radioprogramms, die drahtlos übermittelt werden; das Infotainmentsystem umfasst femer eine Navigations-Einrichtung, die über eine Anzeigeeinrichtung Kartendaten ausgibt und in Beziehung zu einer aktuellen Position, gegebenenfalls auch einer Zielposition, des Fahrzeugs setzt; das Infotainmentsystem kann femer eine Freisprecheinrichtung umfassen, die die Kopplung der Fahrzeug-Einrichtung mit einem Mobilfunktelefon ermöglicht.

Die Vorrichtung, mit Hilfe derer derartige Einrichtungen des Fahrzeugs ansteuerbar sind, kann Bedienelemente, wie etwa Tasten umfassen, wobei vorliegend die Bedienung über Spracheingabe, also Sprachbefehle, im Vordergrund steht: Es gibt somit ein Mikrofon und eine Einrichtung zum Analysieren der von dem Mikrofon aufgenommenen Daten im Sinne einer Spracherkennung.

Zur Spracherkennung muss relativ viel Aufwand getrieben werden, was die zur Verfügung zu stellende Hardware betrifft, insbesondere neben dem Prozessor auch den Speicher, und es muss für einen bestimmten Prozessor eine bestimmte Rechenzeit zur Verfügung gestellt werden. Um den Aufwand nicht übermäßig anwachsen zu lassen, behilft man sich bisher damit, lediglich in eingeschränktem Umfang Sprachbedienung möglich zu machen, nämlich indem eine Anzahl von Sprachbefehlen definiert wird, die die Bedienung ermöglichen. Auf diese Weise muss der Funktionsumfang des (Sprachbedien-)Systems zum Zeitpunkt der Auslieferung des Fahrzeugs genau festgelegt sein. Gleichermaßen kann auch bei Bereitstellung der Funktionalitäten über ein Mobilfunktelefon auf diesem auch nicht flexibel eine neue Funktionalität festgelegt werden.

Man würde nun gerne zu einem späteren Zeitpunkt neue Funktionalitäten definieren können. Bisher geht dies in eingeschränktem Maße durch die Nutzung von Webbrowsern (beispielsweise unter Nutzung der Formate HTML und WAP). Mit Hilfe derartiger Webbrowser lässt sich aber lediglich eine Sprachausgabe realisieren, nicht aber eine Spracheingabe zur Bereitstellung neuartiger Ansteuerungsweisen (neue Ereignisse bei der Bereitstellung neuer Funktionen).

Die US 2004/0193420 A1 beschreibt ein Verfahren zum Verarbeiten von Sprachbefehlen in einem Kraftfahrzeug. Dabei werden entsprechende Dateien ausgetauscht, in denen eine Ansteuerungsweise für eine funktionelle Einrichtung hinterlegt ist. Die Dateien können mit einer vom Fahrzeug verschiedenen Einrichtung empfangen werden. Damit kann die funktionelle Einrichtung über den Sprachbefehl angesteuert werden.

Des Weiteren beschreibt die US 2002/0069063 A1 ein Heimnetzwerk mit digitalen Schnittstellen. An die digitalen Schnittstellen können Geräte gekoppelt und über Sprachbefehle gesteuert werden.

Zudem ist aus der US 2007/0288242 A1 ein Kontrollsystem für Luftfahrzeuge bekannt, das über Spracheingaben gesteuert werden kann. Das Kontrollsystem kann einen Host-Prozessor umfassen, der mit einer Datenbank zum Speichern und Empfangen von Sprachbefehlen gekoppelt ist.

Die DE 199 42 869 A1 beschreibt ein Verfahren zum Betrieb einer sprachgesteuerten Einrichtung bei Kraftfahrzeugen, beim dem die Sprachbefehle über Sprachmustervergleich einer Gerätefunktion in Kraftfahrzeug zugewiesen wird. Dabei können auch über Telematikdienste eintreffende Daten bzw. Funktionen ad hoc in sprachbefehlansteuerbare Sprachmuster transkribiert werden.

Aus der US 2008/0103779 A1 ist ein Verfahren zum Empfangen von Sprachbefehlen bekannt, anhand von denen Fahrzeugfunktionen gesteuert werden können.

Schließlich beschreibt die US 2009/0055178 A1 ein Verfahren zum Erfassen von Sprachbefehlen in einem Kraftfahrzeug. Dabei wird zusätzlich zu dem Sprachbefehl auch eine Position bestimmt, von der der Sprachbefehl ausgeht.

Es ist somit eine Aufgabe der vorliegenden Erfindung, ein Verfahren der eingangs genannten Art bereitzustellen, das in besonderem Maße zur Nachrüstung eines bereits vorhandenen Systems, insbesondere des Infotainmentsystems geeignet ist.

Diese Aufgabe wird durch ein Verfahren mit den Merkmalen gemäß Patentanspruch 1 gelöst. Das erfindungsgemäße Verfahren umfasst somit folgende Schritte:
- Empfangen einer Datei mit Daten, die zumindest einen Sprachbefehl angeben und zugehörig dazu eine Ansteuerungsweise für eine funktionelle Einrichtung, und zwar wird die Datei von einer von dem Fahrzeug verschiedenen Einrichtung durch das Fahrzeug empfangen,
- Empfangen einer Spracheingabe durch das Fahrzeug, insbesondere durch die Vorrichtung,
- Vergleichen der Spracheingabe mit dem zumindest einen Sprachbefehl aus der Datei, und falls nach einem vorbestimmten Kriterium eine Entsprechung mit einem der Sprachbefehle festgestellt wird,
- Ansteuern der funktionellen Einrichtung gemäß der zu dem einen der Sprachbefehle, zu dem die Entsprechung festgestellt wird, zugehörigen Ansteuerungsweise, wobei
- die Einrichtung ein Mobilfunkgerät ist,
- die Datei von dem Mobilfunkgerät (200) generiert und an des Fahrzeug übermittelt wird und
- die Datei ein XML-Format, vorzugsweise ein SCXML-Format, aufweist und durch einen Interpreter der Vorrichtung interpretiert wird,
- die funktionelle Einrichtung Teil des Mobilfunkgeräts ist und
- auf auf dem Mobilfunkgerät abgelegte und dort zum Ablauf bringbare Applikationen über die Sprachbefehle zugegriffen wird, die über das Infotainmentsystem eingegeben werden und zuvor nicht bekannt waren.

Bei dem erfindungsgemäßen Verfahren wird somit dem Fahrzeug bzw. der Vorrichtung des Fahrzeugs über eine Datei der Sprachbefehl als solcher mitgeteilt und das, was auf diesen Sprachbefehl hin bewirkt werden soll. Durch Empfangen einer Datei im Rahmen einer Nachrüstung des Fahrzeugs, auf dem bereits bisher Sprachbefehle abgelegt sein mögen, kann der bisherige Satz von Sprachbefehlen erweitert werden, insbesondere nachträglich erweitert werden.

Bei einer bevorzugten Ausführungsform der Erfindung ist zumindest einem Teil der Sprachbefehle ein auf die Vorrichtung oder eine von der Vorrichtung anzusteuernde funktionelle Einrichtung bezogener Zustand zugeordnet. Vor dem Schritt des Vergleichens wird der Zustand ermittelt. Es erfolgt dann das Vergleichen nur mit denjenigen Sprachbefehlen, denen der selbe Zustand zugeordnet ist, oder sog. generellen Sprachbefehlen, denen gar kein spezifischer Zustand zugeordnet ist. Hier wird zur Erleichterung der Spracherkennung berücksichtigt, dass in einem bestimmten Zustand nur eine eingeschränkte Anzahl an Sprachbefehlen sinnvoll ist, sodass auch nur diese eingeschränkte Art an Sprachbefehlen erkannt werden muss. Dem Zustand folgt die Ansteuerungsweise, also ein sog. Ereignis, das den Zustand ändert. Es kann sich dann ein weiterer Zustand ergeben, und der Schritt des Empfangens einer Spracheingabe und des Vergleichens sowie nachfolgend des Ansteuerns kann abermals durchgeführt werden. Auf diese Weise ist ein komplexer Sprachdialog verwirklichbar, die mit komplexen Bedienvorgängen innerhalb der flexiblen nachgeladenen Funktion einher gehen.

Die empfangene Datei weist ein XML-Format auf, vorzugsweise ein SCXML-Format, und in an sich bekannter Weise wird die Datei dann durch einen Interpreter interpretiert, der Teil der Vorrichtung ist, die über Sprachbefehle bedienbar ist: Ein Interpreter wandelt Befehle aus einer XML-Datei sogleich in Steuersignale um. Das XML-Format eignet sich in besonderem Maße zur Übermittlung der Sprachbefehle und dessen, was die Sprachbefehle bewirken sollen. Das XML-Format ist nämlich plattformunabhängig und kann daher von unterschiedlichen Systemen verarbeitet werden.

Bei einer Alternative der Erfindung wird durch die Daten die Aussprache des zumindest einen Sprachbefehls angegeben, z. B. in einer Art von Lautsprache. Alternativ hierzu wird durch die Daten die Schreibweise des zumindest einen Sprachbefehls angegeben, sodass die Vorrichtung anhand einer Grundgrammatik auf die Aussprache schließen kann bzw. umgekehrt durch die Aussprache auf das Aussprechen eines bestimmten Sprachbefehls schließen kann. Beide Alternativen sind je nach Kontext vorteilhaft: Das Angeben der Aussprache durch die Daten hat den Vorteil, dass die Vorrichtung unmittelbar auf die Daten zugreifen kann; hingegen ist das Angeben der Schreibweise des Sprachbefehls etwas einfacher umsetzbar.

Bei einer bevorzugten Variante der Erfindung wird die Datei von einem fahrzeugexternen Server empfangen. Solche Server können vom Hersteller (OEM) bereitgestellt werden, beispielsweise vom Hersteller des Fahrzeugs, der mit Hilfe der übermittelten Datei Aktualisierungen in den Funktionalitäten des Fahrzeugs vornehmen kann. Also lässt sich das Fahrzeug auf einfache Anfrage beim Hersteller nachrüsten. Für das Fahrzeug gibt es somit einen einfachen Adressaten, an den es sich zum Nachrüsten wenden kann. Andere Personen und Gesellschaften können selbstverständlich auch für einen solchen Server verantwortlich sein.

Bei dieser Variante erfolgt das Empfangen der Datei bevorzugt über eine Mobilfunkverbindung, z. B. UMTS oder LTE, nämlich insbesondere über Internet. Über das Internet ist eine herunterzuladende Datei besonders leicht auswählbar, eben insbesondere in Zusammenhang mit einer von einer Bedienperson leicht zu bedienenden Vorrichtung des Infotainmentsystems. Zum Herunterladen der Dateien müssen nicht notwendigerweise Sprachbefehle verwendet werden, sondern es können Tasten und andere haptische Bedienelemente betätigt werden.

Gemäß der Erfindung wird die Datei von einem Mobilfunkgerät empfangen. Insbesondere von Mobilfunkgeräten ist das Nachrüsten als in hohem Maße gängig bekannt: Mit Hilfe eines Mobilfunkgeräts lassen sich sog. Applikationen (Apps) herunterladen. Will man nun diese Apps vom Fahrzeug aus bedienen, also über die Mensch-Maschine-Schnittstelle des Fahrzeugs inklusive der Vorrichtung, die über Sprachbefehle bedienbar ist, dann muss bei der Erfindung lediglich die Datei (etwa im XML-Format) von dem Mobilfunkgerät generiert und an das Fahrzeug übermittelt bzw. einfach weitergeleitet werden; sodann lässt sich auch vom Fahrzeug aus die auf dem Mobilfunkgerät abgelegte Applikation ansteuern. Die funktionelle Einrichtung ist dann somit Teil des Mobilfunkgeräts, das Ansteuern erfolgt allerdings in dem Fahrzeug.

Bei dieser Variante erfolgt das Empfangen der Daten bevorzugt über eine von einer Mobilfunkverbindung verschiedene drahtlose Verbindung; denn Mobilfunkgeräte sind über entsprechende Schnittstellen mit dem Fahrzeug koppelbar, beispielsweise über Bluetooth^{®}.

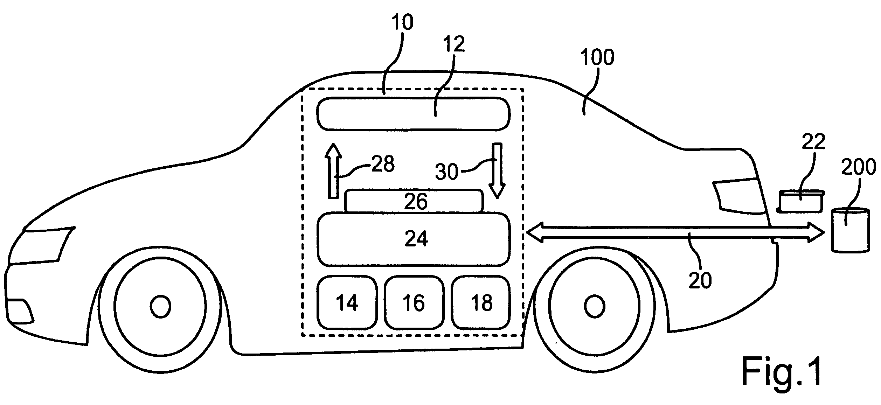

Nachfolgend wird eine bevorzugte Ausführungsform der Erfindung unter Bezug auf die Zeichnung näher beschrieben, in der die einzige
Fig. 1 die zur Realisierung des erfindungsgemäßen Verfahrens notwendigen Softwarebausteine und Austauschvorgänge zwischen diesen veranschaulicht.

Ein im Ganzen mit 100 bezeichnetes Fahrzeug weist ein durch eine gestrichelte Linie abgegrenztes Infotainmentsystem 10 auf. Bei diesem ist über eine Mensch-Maschine-Schnittstelle insbesondere eine Spracheingabe ermöglicht, die aufgrund einer Spracherkennung als Sprachbefehl interpretierbar ist. Zum Infotainmentsystem 10 gehören ferner weitere Schnittstellen, beispielsweise eine Schnittstelle 14 zu einer Navigations-Einrichtung, eine Schnittstelle 16 für eine Telefon-Einrichtung, eine Schnittstelle 18 für eine Multimedia-Einrichtung etc.

In dem Infotainmentsystem 10 sind für die Sprachsteuerung Sprachbefehle in endlicher Anzahl abgelegt, denen sog. Ereignisse entsprechen, also Vorgänge, die einen (informationellen) Zustand des Infotainmentsystems bzw. einer über die Schnittstellen 14, 16, 18 angesteuerten Einrichtung desselben in einen entsprechenden anderen Zustand ändern.

Vorliegend soll die Zahl der Befehle erweitert werden, um neue Funktionalitäten auf dem Infotainmentsystem 10 bereitzustellen. Aus diesem Grund wird eine Datenverbindung 20 zwischen dem Infotainmentsystem 10 einer von dem Fahrzeug 100 verschiedenen Einrichtung 200 hergestellt. Bei der Einrichtung kann es sich bei einer Variante um einen fahrzeugextemen Server handeln, bei einer anderen Variante um ein Mobilfunktelefon, das im Fahrzeug 100 mitgeführt wird. Das Fahrzeug 100 bzw. sein Infotainmentsystem 10 sendet nun eine Anfrage an die Einrichtung 200, woraufhin diese eine SCXML-Datei 22 an das Infotainmentsystem 10 sendet, also eine Textdatei. Die SCXML-Datei umfasst Informationen zu zumindest einem Namen eines Befehls, der vorliegend über Sprachsteuerung abgebbar sein soll, also eines Sprachbefehls, und zusätzlich zu jedem Sprachbefehl ein Ereignis, also einer Zustandsänderung.

Im Infotainmentsystem 10 interpretiert ein Interpreter 24, der mit einer digitalen Schnittstelle 26 für die Mensch-Maschine-Schnittstelle zusammenwirkt, die SCXML-Datei. Gemäß dem Pfeil 28 wird von dem Interpreter 24 eine Tabelle an die Schnittstelle 12 übermittelt, die die Sprachbefehle den umzusetzenden Ereignissen zuordnet. Es wird nun über die Schnittstelle 12 ein Sprachbefehl eingegeben. Die Schnittstelle 12 ermittelt nun zunächst den bestehenden (informationellen) Zustand; denn wenn es um Zustandsübergänge geht, so muss zunächst klar sein, von welchen Zuständen ausgegangen wird. Nun sind lediglich zu einer beschränkten Anzahl von Sprachbefehlen Zustandsübergänge (Ereignisse) definiert, die von dem vorherrschenden Zustand ausgehen; nur diese werden nachfolgend einbezogen, zusammen mit möglicherweise generell definierten Sprachbefehlen (wie z. B. das stets gültige "Abbrechen" o. ä.). Die Schnittstelle 12 vergleicht nun die Spracheingabe mit den zur Verfügung stehenden (also beim gegenwärtigen Zustand gültigen) Sprachbefehlen und stellt fest, welchem Sprachbefehl die Spracheingabe entspricht. Eine entsprechende Information wird gemäß dem Pfeil 30 an den Interpreter 24 übermittelt, der sodann entsprechend Zustandsübergänge (Ereignisse) hervorruft, insbesondere unter Einsatz der Schnittstellen.

Durch das Übermitteln der SCXML-Datei 22 kann somit das Fahrzeug 100 bzw. sein Infotainmentsystem 10 um zusätzliche Informationen erweitert werden.

Im Falle, dass die Einrichtung 200 ein fahrzeugextemer Server ist, kann dieser Server vom Hersteller des Fahrzeugs 100 bereitgestellt sein. Beispielsweise kann bei jedem Start des Fahrzeugs 100 oder funktioneller Einheiten desselben oder in wiederkehrenden Zeitintervallen bzw. nach bestimmten Fahrtstrecken oder Fahrtzeiten eine Anfrage von einem Fahrzeug 100 bzw. seinem Infotainmentsystem 10 an den externen Server 200 gemacht werden, damit stets aktuelle Funktionalitäten in dem Fahrzeug 100 vorgehalten werden.

Die Einrichtung 200 ist ein Mobilfunktelefon, das über Bluetooth^{®}, WLAN, USB-Kabel, iphone®-Kabel o.ä. mit dem Infotainmentsystem 10 gekoppelt sein kann. In diesem Falle ermöglicht es das Übermitteln der SCXML-Datei 22, auf auf dem Mobilfunktelefon abgelegte und dort zum Ablauf bringbare Apps (Applikationen) zuzugreifen, und zwar über Sprachbefehle, die über das Infotainmentsystem 10 eingegeben werden und zuvor nicht bekannt waren.

## Patentansprüche

1. Verfahren zum Ansteuern funktioneller Einrichtungen (14, 16, 18) in einem Fahrzeug (100) mittels einer Vorrichtung (12) eines Infotainmentsystems (10), die über Sprachbefehle bedienbar ist, mit:
- Empfangen einer Datei (22) mit Daten, die zumindest einen Sprachbefehl angeben und zugehörig dazu eine Ansteuerungsweise einer funktionellen Einrichtung (14, 16, 18) angeben, von einer von dem Fahrzeug verschiedenen Einrichtung (200) durch das Fahrzeug (100),
- Empfangen einer Spracheingabe durch die Vorrichtung (12),
- Vergleichen der Spracheingabe mit zumindest einem Sprachbefehl aus der Datei, und falls nach einem vorbestimmten Kriterium eine Entsprechung mit einem der Sprachbefehle festgestellt wird,
- Ansteuern der funktionellen Einrichtung (14, 16, 18) gemäß der zu dem einen der Sprachbefehle, zu dem eine Entsprechung festgestellt wird, zugehörigen Ansteuerungsweise, wobei
- die Einrichtung (200) ein Mobilfunkgerät ist,
- die Datei (22) von dem Mobilfunkgerät generiert und an das Fahrzeug (100) übermittelt wird,
- die Datei (22) ein XML-Format, vorzugsweise ein SCXML-Format, aufweist und durch einen Interpreter (24) der Vorrichtung (12) interpretiert wird,
- die funktionelle Einrichtung (14, 16, 18) Teil des Mobilfunkgeräts ist und
- auf auf dem Mobilfunkgerät abgelegte und dort zum Ablauf bringbare Applikationen über die Sprachbefehle zugegriffen wird, die über das Infotainmentsystem (10) eingegeben werden und zuvor nicht bekannt waren.

2. Verfahren nach Anspruch 1,
**dadurch gekennzeichnet, dass**
zumindest einem Teil der Sprachbefehle ein auf die Vorrichtung (12) oder eine funktionelle Einrichtung (14, 16, 18) bezogener Zustand zugeordnet ist und vor dem Vergleichen der Zustand ermittelt wird und ein Vergleichen nur mit solchen Sprachbefehlen erfolgt, denen der selbe Zustand oder kein spezifischer Zustand zugeordnet ist.

3. Verfahren nach einem der Ansprüche 1 bis 2,
**dadurch gekennzeichnet, dass**
durch Daten die Aussprache des zumindest einen Sprachbefehls angegeben wird.

4. Verfahren nach einem der Ansprüche 1 bis 2,
**dadurch gekennzeichnet, dass**
durch die Daten die Schreibweise des zumindest einen Sprachbefehls angegeben wird.

5. Verfahren nach einem der Ansprüche 1 bis 4,
**dadurch gekennzeichnet, dass**
die Datei (22) von einem fahrzeugexternen Server (200) empfangen wird.

6. Verfahren nach Anspruch 5,
**dadurch gekennzeichnet, dass**
das Empfangen der Daten über eine Mobilfunkverbindung erfolgt.

7. Verfahren nach einem der Ansprüche 1 bis 5,
**dadurch gekennzeichnet, dass**
das Empfangen der Datei (22) über eine von einer Mobilfunkverbindung verschiedene drahtlose Verbindung erfolgt.

## Claims

1. Method of controlling functional equipment (14, 16, 18) in a vehicle (100) by means of a device (12) in an infotainment system (10) controllable by means of voice commands, with:
- reception of a file (22) with data that give at least one voice command and in association with this give a method of controlling functional equipment (14, 16, 18) via the vehicle (100) from equipment (200) different to the vehicle,
- reception of a voice input by the device (12),
- comparison of the voice input with at least one voice command from the file, and if a correspondence with one of the voice commands is established in accordance with a predetermined criterion,
- control of the functional equipment (14 ,16, 18) in accordance with a control method associated with one of the voice commands with which a correspondence was established,
- the equipment (200) is an item of mobile telephony equipment,
- the file (22) is generated by the mobile telephony equipment and transmitted to the vehicle (100),
- the file (22) is in an XML format, preferably SCXML, and is interpreted by an interpreter (24) in the device (12),
- the functional equipment (14, 16, 18) is part of the mobile telephony equipment, and
- access is had via voice commands, which are entered via the infotainment system (10) and were not known previously, to applications stored on the mobile telephony equipment and that can be run on it.

2. Method according to claim 1, **characterised in that** at least part of the voice commands is allocated to a status relating to the device (12) or a functional item of equipment (14, 16, 18) and the status is ascertained before the comparison, and a comparison is only carried out with such voice commands to which the same status or no specific status is allocated.

3. Method according to either of claims 1 to 2, **characterised in that** the pronunciation of at least one voice command is given by data.

4. Method according to either of claims 1 to 2, **characterised in that** the spelling of at least one voice command is given by data.

5. Method according to any of claims 1 to 4, **characterised in that** the data (22) are received from a server (200) external to the vehicle.

6. Method according to claim 5, **characterised in that** the reception of the data takes place by means of a mobile telephony connection.

7. Method according to any of claims 1 to 5, **characterised in that** the reception of the data (22) takes place by means of a wireless connection distinct from a mobile telephony connection.

## Revendications

1. Procédé permettant de commander des dispositifs fonctionnels (14, 16, 18) dans un véhicule (100) à l'aide d'un dispositif (12) d'un système d'info-divertissement (10) qui peut être commandé par des ordres vocaux, avec :
- la réception d'un fichier (22) avec des données qui indiquent au moins un ordre vocal et de manière correspondante à cela indiquent un mode de commande d'un dispositif fonctionnel (14, 16, 18), par un dispositif (200) différent du véhicule par le véhicule (100),
- la réception d'une entrée vocale par le dispositif (12),
- la comparaison de l'entrée vocale avec au moins un ordre vocal du fichier, et si une correspondance avec l'un des ordres vocaux est constatée selon un critère prédéterminé,
- la commande du dispositif fonctionnel (14, 16, 18) selon le mode de commande afférent à l'un des ordres vocaux, pour lequel est constatée une correspondance,
- le dispositif (200) étant un appareil radio mobile,
- le fichier (22) étant généré par l'appareil radio mobile et transmis au véhicule (100),
- le fichier (22) présentant un format XML, de préférence un format SCXML et étant interprété par un interprète (24) du dispositif (12),
- le dispositif fonctionnel (14, 16, 18) faisant partie de l'appareil radio mobile et
- des applications pouvant y être amenées à expiration et archivées sur l'appareil radio mobile étant accessibles par les ordres vocaux qui sont entrés par le système d'info-divertissement (10) et n'étaient pas connus précédemment.

2. Procédé selon la revendication 1,
**caractérisé en ce que**
à au moins une partie des ordres vocaux est associé un état lié au dispositif (12) ou à un dispositif fonctionnel (14, 16, 18) et l'état est déterminé avant la comparaison et une comparaison est effectuée seulement avec de tels ordres vocaux, auxquels le même état ou aucun état spécifique n'est associé.

3. Procédé selon l'une quelconque des revendications 1 à 2,
**caractérisé en ce que**
la prononciation de l'au moins un ordre vocal est indiquée par des données.

4. Procédé selon l'une quelconque des revendications 1 à 2,
**caractérisé en ce que**
l'écriture d'au moins un ordre vocal est indiquée par les données.

5. Procédé selon l'une quelconque des revendications 1 à 4,
**caractérisé en ce que**
le fichier (22) est reçu par un serveur externe au véhicule (200).

6. Procédé selon la revendication 5,
**caractérisé en ce que**
la réception des données est effectuée par une liaison radio mobile.

7. Procédé selon l'une quelconque des revendications 1 à 5,
**caractérisé en ce que**
la réception du fichier (22) est effectuée par une liaison sans fil différente d'une liaison radio mobile.
